# EUROPÄISCHE PATENTANMELDUNG

(11) **EP 1 914 528 A2**
(43) Veröffentlichungstag der Anmeldung: **23.04.2008**
(21) Anmeldenummer: 07020468.0
(22) Anmeldetag: 19.10.2007
(51) Int. Cl.: G01G 13/24, G01G 17/02, B65B 35/24

(54) **Dämmstofffüllungswiegeeinrichtung**

(30) Priorität: 20.10.2006 AT 76306 U
(71) Anmelder: Isocell Vertriebsges.m.b.H., 5202 Neumarkt am Wallersee (AT)
(72) Erfinder: Spitaler, Anton, 5204 Strasswalchen (AT)
(74) Vertreter: Dupal, Helmut

(57) **Zusammenfassung**

Dämmstofffüllungswägeeinrichtung mit mehreren Wiegesensoren (3), die mechanisch mit einer Dämmstofffüllmaschine (2) und elektrisch mit einer elektronischen Datenverarbeitungseinheit (4), mit einer Anzeige/Ausgabe des gemessenen Gewichtes verbunden sind, wobei an einer Dämmstofffüllmaschine (2), insbesondere bestehend aus Pressballenauflöse-(5) und Flockungsfüllmaschine (6), vier Wiegezellen (1) mit Wiegesensoren (3) symmetrisch verteilt am gemeinsamen Maschinengerüst (7) angebracht sind, auf denen sich die Dämmstofffüllmaschine (2) abstützt.

## Beschreibung

Die Erfindung betrifft eine Dämmstofffüllungswiegeeinrichtung mit den Merkmalen des Oberbegriffes des Anspruches 1.

Einrichtungen zur Bestimmung der Füllmenge, an körnigen, mehligen, fasrigem Gut oder dergleichen, in Hohlkörpern durch Wiegen der Hohlkörper vor und/oder nach und auch während des Wiegevorganges sind bekannt.
Ebenso ist bekannt, die Entnahmmenge solcher Güter aus vorgegebenen Packungen durch Wiegen derselben zu bestimmen.

Bei einer Einrichtung Zum Füllen von großen, sperrigen unterschiedlich geformten und besonders von bereits fest eingebauten Hohlteilen, wie Bauelementen mit definierten Mengen an Dämmstoff, etwa aufgelösten Papierflocken, können die vorgenannten Methoden nicht oder nur umständlich und ungenau angewandt werden.

Damit durch Saigerung des Dämmstoffes keine Hohlräume in der Hohlteilen, wie Bauelementen, entstehen, aber auch keine zu stark komprimierte Füllung entsteht, ist eine einfache rasche und hinreichend genaue Bestimmung der eingefüllten Dämmstoffmenge notwendig.

Aufgabe der Erfindung ist es eine Einrichtung zu schaffen mit der, bei geringem Aufwand, die in Hohlteile wie Bauelemente, eingebrachte Dämmstoffmenge bestimmt werden kann. Dafür ist, vor allem bei einer Pressballenauflösemaschine in Kombination mit einer Flockungsfüllmaschine, zur Befüllung mit Dämmstoff aus aufgeschlossenem Papierfasergut, hergestellt aus in Pressballen, insbesondere Großballen, gepreßten Papierfasern, die Messung des in der Flockungsfüllmaschine enthaltenen Fasergutes und der im unaufgelösten Pressballen enthaltenen Gutmenge vor und nach Beendigung des Füllvorganges mit einer einfachen Wiegeanordnung notwendig.

Diese Aufgabe wird bei einer Einrichtung der eingangs genannten Art, nach dem Oberbegriff des Anspruches 1, mit den Merkmalen des kennzeichnenden Teiles des Anspruches 1 gelöst.

Die Unteransprüche betreffen besonders vorteilhafte Ausgestaltungen der Erfindung und bilden ebenso wie Anspruch 1 gleichzeitig einen Teil der Beschreibung der Erfindung.

Bei der gewählten Anordnung der Wiegesensoren wird das in der Maschine enthaltene Faserinventar, aufgelegter Pressballen und aufgelöstem Fasergut, mitsamt den kombinierten Pressballenauflöse- und Flockungsfüllmaschinen und einem Teil der Zuleitung zu dem zu befüllenden Hohlteil, von den vier Wiegesensoren gewogen und nach der Befüllung nochmals gewogen, woraus sich die eingeblasene Menge an Dämmstoffgut ergibt, die direkt zur Anzeige gebracht werden kann.

Es ist dadurch ein Leichtes eine Nachbefüllung bis zum Erreichen des berechneten Sollwertes vorzunehmen.

Mit der symmetrischen Verteilung der Wiegesensoren wird eine besonders empfindliche Wiegekonfiguration erreicht.

Zur Vermeidung des Eintrages von Schwingungen und zur Erzielung einer hohen Stabilität der Anbringung der Wiegesensoren, sind diese in Wiegezellen zusammengebaut an Laschen verschraubt, die in den Ecken der unteren Längs- und Querträger des Gemeinsamen Maschinengerüstes, jeweils an den beiden angeschweißt sind, wobei die Wiegesensoren in geringem Abstand zu diesen Trägern angebracht sind, um zusätzlichen Schwingungseintrag zu vermeiden, der die Messung stören würde.

Die abgeschirmten Zuleitungskabel zu der elektronischen Datenverarbeitungseinheit der Wiegeeinrichtung sind in Verrohrungen an den unteren Längsträgern und bis in den Steuerungsteil der Flockungsbefüllmaschine geführt, wo sie mit der elektronischen Datenverarbeitungseinheit elektrisch verbunden sind.

Zur besonderen Vereinfachung kann die elektronische Datenverarbeitungseinheit auf eine voreinstellbare Füllmenge programmierbar sein, wodurch dann die Dämmstofffüllmaschine automatisch bis zum Erreichen der eingestellten Füllmenge gesteuert werden kann.

Es wird dadurch nur bei Füllungsbeginn und bei Füllungsende, sowie gegebenenfalls bei der Abgabe einer, von einem Pressballen entleerten, Palette und bei der Aufnahme eines neuen Pressballens die Messung des Restgewichtes und des Neugewichtes erforderlich.

Ein Ausführungsbeispiel der Erfindung wird nachstehend an Hand der Zeichnung beschrieben.
Es zeigt:
- Fig. 1: die Dämmstofffüllungswägeeinrichtung an einer kombinierten Pressballenauflöe- und Flockungsfüllmaschine auf einem gemeinsamen Maschinengerüst, in Seitenansicht, schematisch, mit aufliegenden Pressballen;
- Fig. 2: die Dämmstofffüllungswägeeinrichtung an einer kombinierten Pressballenauflöse- und Flockungsfüllmaschine nach Fig.1 in Draufsicht, im Bereich des Maschinengerüstes geschnitten, mit aufgenommenen, noch stehenden Pressballen, schematisch;
- Fig. 3: die Dämmstofffüllungswägeeinrichtung an einer kombinierten Pressballenauflöe- und Flockungsfüllmaschine ein Ausschnitt nach Fig.2 im Bereich des unteren Teils des Maschinengerüstes mit einer Wiegezelle mit Wiegesensor, schematisch.

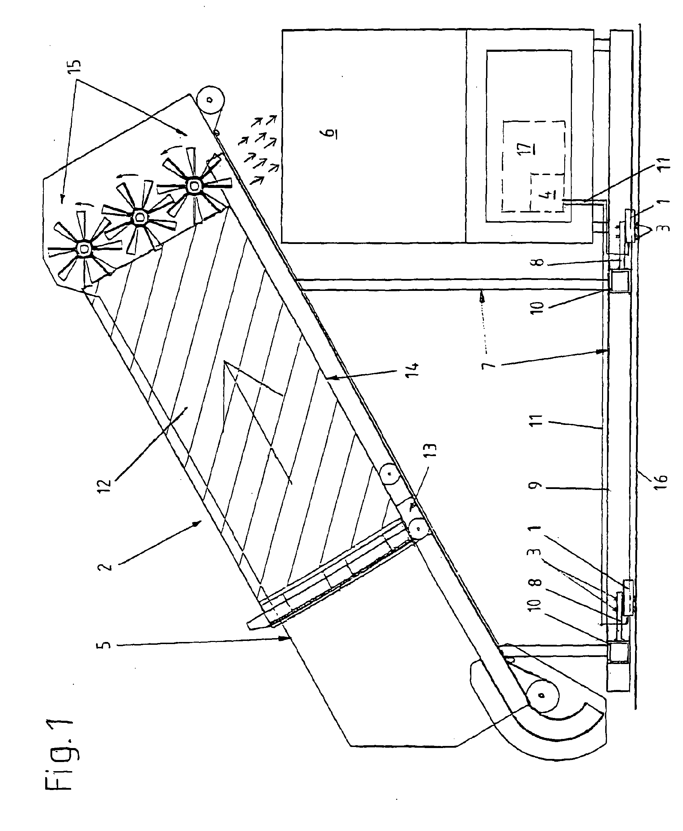

In Fig. 1 ist eine Pressballenauflösemaschine 5 zusammengebaut mit einer Flockungsfüllmaschine 6 dargestellt, die beide in einem gemeinsamen Maschinengerüst 7 montiert sind.

Ein Pressballen 12 liegt auf der Zuführungseinrichtung 14 der Pressballenauflösemaschine 5 und wird von deren Aufnahmereinrichtung 13 einer Pressballenauflöseeinrichtung 15 zugeführt.

Das Maschinengerüst 7 stützt sich mit vier Wiegezellen 1 an deren Wiegesensoren 3 ab, die entsprechend der Gewichtsverteilung am aufnahmeseitigen Ende der Dämmstofffüllmaschine 2 und vor der Flockungsfüllmaschine 6 in den Ecken zwischen den untenliegenden Längsträgern 9 und Querträgern 10 des Maschinengerüstes 7 angeordnet sind.

Von den Sensoren 3 führen Kabel 11, in Verrohrungen geführt, an eine Datenverarbeitungseinheit 4 der Wiegeeinrichtung, die im Steuerungsteil 17 der Flockungsfüllmaschine 6 angebracht ist.

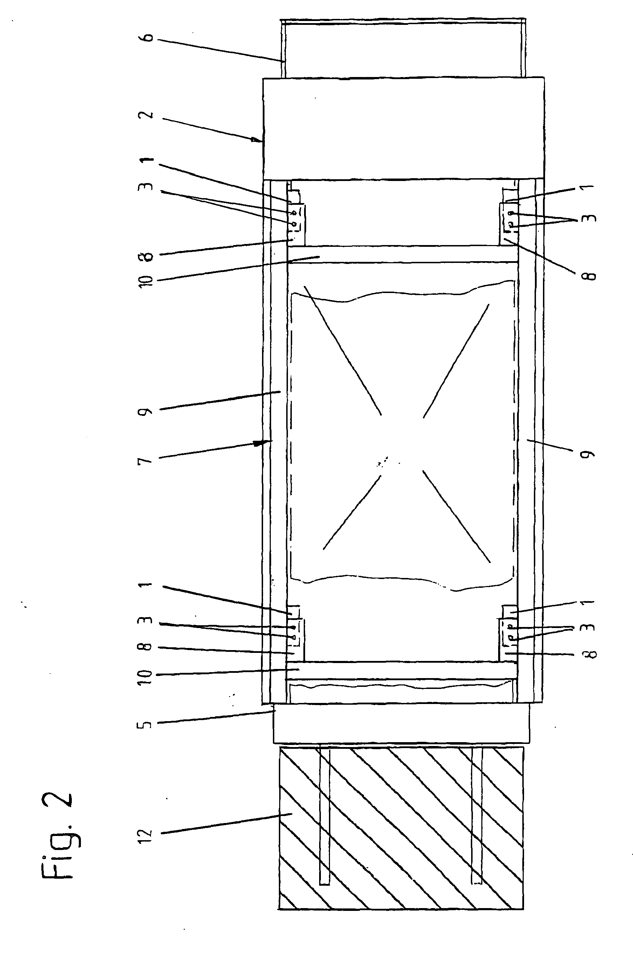

In Fig. 2 ist die Lage der vier Wiegezellen 1 mit den Wiegesensoren 3 in der Draufsicht zu sehen.

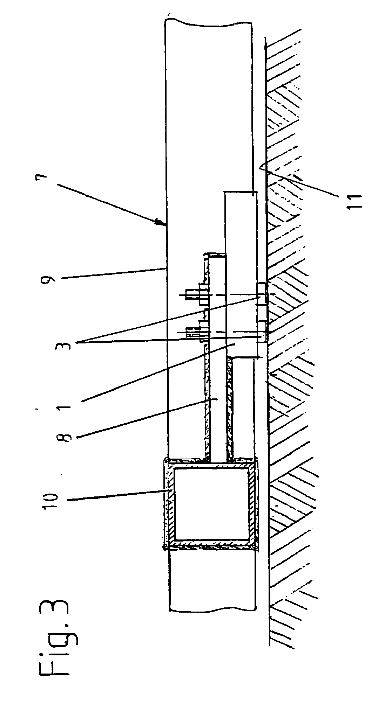

Fig. 3 zeigt die Anbringung einer Wiegezelle 1 mit den Wiegesensoren 3 in einem Ausschnitt, in dem ein Teil eines Längsträgers 9, der mit einem Querträger 10 verschweißt ist. Zwischen diesen ist waagrecht eine Winkellasche 8 beiderseits angeschweißt, an der in Bohrungen eine Wiegezelle 1 mit zwei Wiegesensoren 3 mit Verschraubungen befestigt ist, die sich auf dem Boden 16 abstützen.

### Bezugszeichenliste

- 1: Wiegezelle
- 2: Dämmstofffüllmaschine
- 3: Wiegesensor der Wiegezelle 1
- 4: Datenverarbeitungseinheit der Wiegeeinrichtung
- 5: Pressballenauflösemaschine
- 6: Flockungsfüllmaschine
- 7: Maschinengerüst
- 8: Winkellasche
- 9: Längsträger des Maschinengerüstes 7
- 10: Querträger des Maschinengerüstes 7
- 11: Kabel der Datenverarbeitungseinheit 4
- 12: Pressballen
- 13: Aufnahmeeinrichtung der Pressballenauflösemaschine 5
- 14: Zuführungseinrichtung der Pressballenauflösemaschine 5
- 15: Pressballenauflöseeinrichtung der Pressballenauflösemaschine 5
- 16: Boden
- 17: Steuerungsteil der Pressballenauflösemaschine 5

## Patentansprüche

1. Dämmstofffüllungswiegeeinrichtung mit mehreren Wiegesensoren (3) die mechanisch mit einer Dämmstofffüllmaschine (2) und elektrisch mit einer elektronischen Datenverarbeitungseinheit (4) mit einer Anzeige/Ausgabe des gemessenen Gewichtes verbunden sind, **dadurch gekennzeichnet, dass** an einer Dämmstofffüllmaschine (2), bestehend aus Pressballenauflöse- (5) und Flockungsfüllmaschine (6), vier Wiegezellen (1) mit Wiegesensoren (3) symmetrisch verteilt am gemeinsamen Maschinengerüst (7) angebracht sind, auf denen sich die Dämmstofffüllmaschine (2) abstützt, wobei die Wiegezellen (1) mitsamt den Wiegesensoren (3) an Winkellaschen (8) verschraubt sind und die Winkellaschen (8) in den Ecken, der am Boden (16) lagernden Längsträger (9) und Querträger (10), jeweils zwischen diesen verschweißt sind.

2. Dämmstofffüllungswiegeeinrichtung nach Anspruch 1 oder 2, **dadurch gekennzeichnet, dass** die Wiegesensoren (3) mit abgeschirmten Kabeln (11) mit der, im Steuerungsteil (17) der Flockungsfüllmaschine (7) angeordneten, elektronischen Datenverarbeitungseinheit (4) elektrisch verbunden sind.

3. Dämmstofffüllungswiegeeinrichtung nach Anspruch 3, **dadurch gekennzeichnet, dass** die elektronische Datenverarbeitungseinheit (4) auf eine voreinstellbare Füllmenge programmierbar ist und die Dämmstofffüllmaschine (2) automatisch bis zur Füllung mit der voreingestellten Füllmenge steuert.
